# EUROPEAN PATENT APPLICATION

(11) **EP 2 175 350 A1**
(43) Date of publication of application: **14.04.2010**
(21) Application number: 09172367.6
(22) Date of filing: 06.10.2009
(51) Int. Cl.: G06F 3/041

(54) **Multi-touch motion simulation using a non-touch screen computer input device**

(30) Priority: 07.10.2008 US 103481 P
(71) Applicant: Research in Motion Limited, Waterloo, ON N2L 3W8 (CA)
(72) Inventor: Lane, Christopher, deceased (CA)
(74) Representative: Patel, Binesh

(57) **Abstract**

A method of multi-touch portable electronic device simulation using a non-touchscreen computer input device. The method includes entering a multi-touch simulation mode; recording a first touch motion and a second touch motion using the non-touchscreen computer input device; rendering the recorded first touch motion and the recorded second touch motion as a simulated simultaneous multi-touch motion; and generating a sub-routine associated with the simulated simultaneous multi-touch motion.

## Description

### FIELD OF TECHNOLOGY

The present disclosure relates to a simulator for portable electronic devices including touchscreen display devices and a method of simulation of a multi-touch motion using a non-touchscreen computer input device.

### BACKGROUND

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touchscreen display for input and output is particularly useful on such handheld devices as such handheld devices are small and are therefore limited in space available for user input and output devices. Further, the screen content on the touchscreen display devices can be modified depending on the functions and operations being performed. Even still, these devices have a limited area for rendering content on the touchscreen display and for rendering features or icons, for example, for user interaction. With continued demand for decreased size of portable electronic devices, touchscreen displays continue to decrease in size.

Improvements in touchscreen devices are therefore desirable.

### SUMMARY

According to one aspect, there is provided a method of multi-touch motion simulation using a non-touchscreen computer input device. The method comprises entering a multi-touch simulation mode; recording a first touch motion and a second touch motion using the non-touchscreen computer input device; rendering the recorded first touch motion and second touch motion as a simulated simultaneous multi-touch motion; and, generating a sub-routine associated with the simulated simultaneous multi-touch motion. The sub-routine may be generated automatically upon rendering the simulated simultaneous multi-touch motion.

In an example embodiment, the first touch motion and the second touch motion are independent and arbitrary relative to one another.

In another example embodiment, the sub-routine executes a task associated with simulated simultaneous multi-touch motion.

In yet another example embodiment, the simulated simultaneous multi-touch motion defines a multi-touch motion on a portable electronic device having a touchscreen display. The sub-routine associated with the simulated simultaneous multi-touch motion may be generated in a pre-determined programming language supported by the portable electronic device.

In an example embodiment, the multi-touch motion on the portable electronic device corresponds to a swipe motion; a circular motion; an arc motion; a rotate motion, or a pinch motion.

In another example embodiment, the sub-routine associated with the simulated simultaneous multi-touch motion is a first sub-routine and the method further comprises: recording a third touch motion using the non-touchscreen computer input device; rendering the simulated simultaneous multi-touch motion and the recorded third touch motion as a simulated sequential multi-touch motion; and, generating a second sub-routine associated with the simulated sequential multi-touch motion.

The third touch motion may be independent and arbitrary relative to the first touch motion and the second touch motion.

Furthermore, the second sub-routine associated with the simulated sequential multi-touch motion may execute a task associated with the simulated sequential multi-touch motion. The task associated with the simulated sequential multi-touch motion may be a sequential combination or an arbitrary combination of tasks associated with one or more simulated simultaneous multi-touch motions.

According to another aspect, there is provided a simulator to simulate a multi-touch motion using a non-touchscreen computer input device. The simulator comprises an input module, a recorder, a rendering module, and a sub-routine generator. The input module receives a first touch motion and a second touch motion from the non-touchscreen computer input device. The recorder records the first touch motion and the second touch motion and the rendering module renders the recorded first touch motion and the second touch motion as a simulated simultaneous multi-touch motion. The sub-routine generator generates a sub-routine associated with the simulated simultaneous multi-touch motion.

In an example embodiment, the sub-routine associated with the simulated simultaneous multi-touch motion is a first sub-routine. The input module of the simulator further receives a third touch motion from the non-touchscreen computer input device; the recorder records the third touch motion; the rendering module renders the simulated simultaneous multi-touch motion and the recorded third touch motion as a simulated sequential multi-touch motion; and, the sub-routine generator generates a second sub-routine associated with the simulated sequential multi-touch motion.

According to another aspect, there is provided a system for simulating a multi-touch motion. The system comprises a non-touchscreen computer input device, a recorder, a display logic including a display and a sub-routine generator. A first touch motion and a second touch motion are input using the non-touchscreen computer input device. The recorder records the first touch motion and the second touch motion. The display logic renders the recorded first touch motion and the second touch motions as a simulated simultaneous multi-touch motion on a display. The sub-routine generator generates a sub-routine associated with the simulated simultaneous multi-touch motion.

According to another aspect, there is provided a computer-readable medium. The computer-readable medium has computer-readable code embodied therein for execution by a processor to carry out a method of multi-touch motion simulation using a non-touchscreen computer input device. The method comprises entering a multi-touch simulation mode; recording a first touch motion and a second touch motion using the non-touchscreen computer input device; rendering the recorded first and second touch motions as a simulated simultaneous multi-touch motion; and generating a sub-routine associated with the simulated simultaneous multi-touch motion.

BRIEF DESCRIPTION OF THE DRAWINGS

Embodiments of the present disclosure will now be described, by way of example only, with reference to the attached Figures, wherein:

Figure 1 is a schematic representation of a multi-touch simulation using a non-touchscreen input device according to one example;

Figure 2 is a flow chart showing a method of a multi-touch portable electronic device simulation using a non-touchscreen computer input device according to an example embodiment;

Figure 3 is a schematic representation of step 202 of Figure 2;

Figure 4 is a schematic representation of step 204 of Figure 2 according to a first example;

Figure 5 is a schematic representation of step 206 of Figure 2 according to the first example;

Figure 6 is a schematic representation of steps 204 and 206 of Figure 2 according to a second example;

Figure 7 is a schematic representation of steps 204 and 206 of Figure 2 according to a third example;

Figure 8 is a schematic representation of a multi-touch motion simulator according to one example; and,

Figure 9 is a schematic representation of a system for multi-touch motion simulation according to another example.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limiting the scope of the embodiments described herein.

The example embodiments described herein generally relate to a portable electronic device including a touchscreen display and multi-touch portable electronic device simulation using a non-touchscreen computer input device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

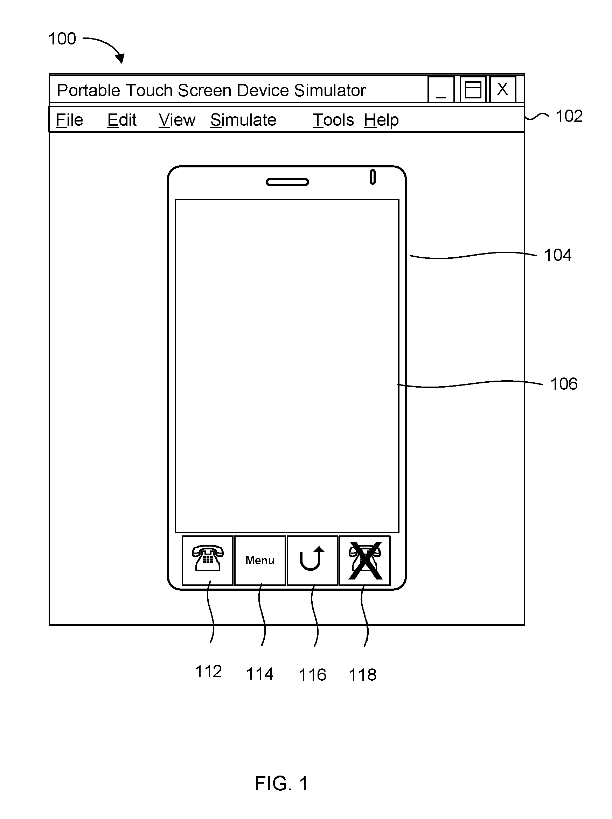

Referring first to Figure 1, there is shown a schematic representation of a multi-touch portable electronic device simulation using a non-touchscreen computer input device. The multi-touch portable electronic device simulation can be a module of a portable touchscreen device simulator 100. The portable touchscreen device simulator 100 can be used in a desktop environment as a developer's tool for product development and/or troubleshooting of a portable electronic device having a touchscreen display. The portable touchscreen device simulator 100 can comprise multiple modules, generally depicted as pull down menu items by reference numeral 102 in Figure 1. The modules include, for example, a file module (which may be implemented as a File menu providing file functions), an edit module (which may be implemented as an Edit menu providing editing functions), a view module (which may be implemented as a View menu providing view functions), a simulation module (which may be implemented as a Simulate menu providing simulation functions), a tool modules (which may be implemented as a Tools menu providing tool functions), and a help module (which may be implemented as a Help menu providing help functions). The portable touchscreen device simulator 100 is typically displayed on a desktop monitor attached to a desktop computer along with its peripheral input device and output devices (all not shown here). The desktop input device can be non-touchscreen input devices, for example, a mouse, keyboard, joystick, trackball, pen, stylus, laser device and the like. For clarity, example embodiments are described herein using a mouse as the non-touchscreen input device.

Figure 1 also shows a simulated view of a portable electronic device 104 having a touchscreen display or a touch-sensitive display 106 and four physical buttons 112, 114, 116, 118 for user-selection for performing functions or operations including an "off-hook" button 112 for placing an outgoing cellular telephone call or receiving an incoming cellular telephone call, a Menu button 114 for displaying a context-sensitive menu or submenu, an escape button 116 for returning to a previous screen or exiting an application, and an "on-hook" button 118 for ending a cellular telephone call. Of course, the physical buttons 112, 114, 116, and 118 are simulated buttons in the portable touchscreen device simulator 100. The portable electronic device typically has a number of virtual input keys or buttons for user interaction, which are not shown in Figure 1 for clarity.

Portable electronic devices having a multi-touch touchscreen display are capable of detecting or tracking two or more touch events or motions (also referred to as gestures) simultaneously and generate a sequence of events, such as for example zooming in or out, rotating, enlarging, selecting, and highlighting in response to the gestures. For ease of use, developers typically use a desktop environment for product development and/or troubleshooting of a portable electronic device. Under such circumstances, developers may not always have access to touchscreen displays (including touchscreen displays having multi-touch capabilities) for developing and/or testing sub-routines relating to various gestures. As described earlier, the portable touchscreen device simulator 100 can be used in a desktop environment as a developer's tool for product development and/or troubleshooting of a portable electronic device having a touchscreen display. Therefore, it is desirable to simulate such simultaneous gestures or multi-touch events in a desktop environment for application development and/or trouble shooting.

It is to be noted that the term desktop environment is used herein to describe a development/troubleshooting environment where the development and/or troubleshooting is performed, and can include desktop computers, laptop computers and the like. Furthermore, the term "sub-routine" is used herein to refer to a procedure, a method, or a function which is part of a larger program, and performs a specific task and is relatively independent of the larger program.

In a typical portable electronic device having a multi-touch touchscreen, a touch event is detected upon user touching of the touchscreen display. Such a touch event can be determined upon a user's touch at the touchscreen display for selection of, for example, a feature in a list, such as a message or other feature for scrolling in the list or selecting a virtual input key. Signals are sent from the touch-sensitive overlay to the controller when a touch is detected. For capacitive touchscreen, for example, signals are sent from the touch sensitive overlay to the controller when a suitable object such as a finger or other conductive object held in the bare hand of a user, is detected. Thus, the touch event is detected and the X and Y location of the touch are determined.

In one example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touchscreen display can be determined. For example, the size and the shape of the touch on the touchscreen display can be determined in addition to the location (X and Y values) based on the signals received at the controller from the touch sensor layers.

In multi-touch enabled portable electronic devices, the X and Y locations corresponding to simultaneous multiple touch events can be similarly determined. Such portable electronic devices generate a sequence of events in response to the user interaction by way of multi-touch gestures such as a straight swipe motion, a circular motion, an arc motion, a rotation motion or a pinch motion. The sequence of events in response to the user's gesture can be the invocation of a sub-routine associated with a specific task, for example, zoom-in and zoom-out function in response to a swipe motion or a pinch motion, respectively.

A touch motion or a touch event can also occur when the user slides his/her finger over to the touchscreen from an initial location and lifts the finger at the another location corresponding to the end of the touch event. The initial touch location and the "lift-off" location along with the intermediate touch locations can then be used define the gesture input by the user, for example, a circular motion gesture or a pinch gesture (in a two-touch event) etc.

The input devices typically used in a desktop environment for non-textual input is a mouse or a joystick, which have one pointer capable of clicking in one location (X, Y coordinates) within the simulation screen at a given time, unlike the multi-touchscreen portable electronic device that can detect, for example, two touches in different locations simultaneously. It is therefore, desirable to provide a multi-touch portable electronic device simulation using a non-touchscreen computer input device.

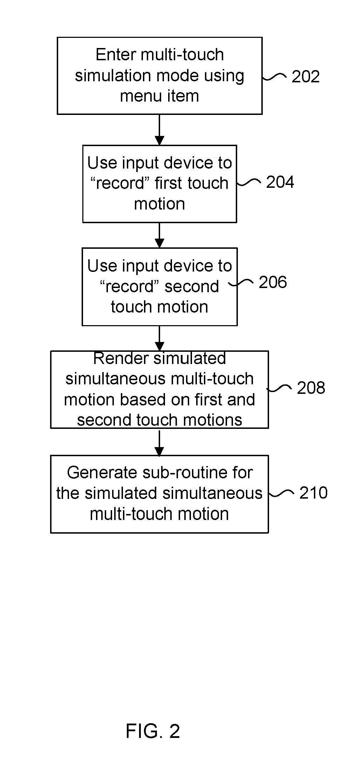

Generally, according to one aspect, there is provided a method of multi-touch motion simulation using a non-touchscreen computer input device. As illustrated in Figure 2, the method includes entering a multi-touch simulation mode (step 202); recording a first touch motion (step 204) and a second touch motion (step 206) using the non-touchscreen computer input device; rendering the recorded first touch motion and the second touch motion as a simulated simultaneous multi-touch motion (step 208); and generating a sub-routine associated with the simulated simultaneous multi-touch motion (step 210).

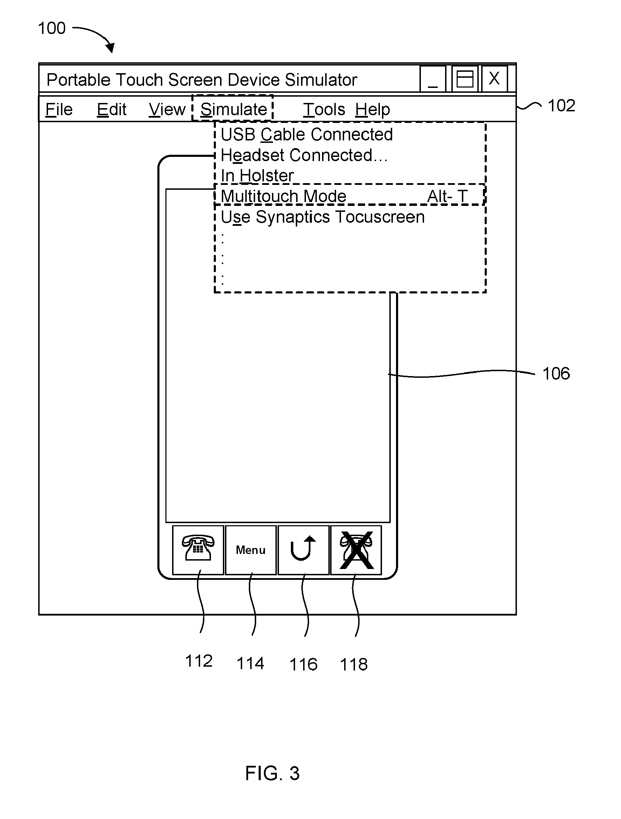

The step of entering the multi-touch simulation mode (step 202) is further illustrated in Figure 3. The user or developer using the portable touchscreen device simulator 100, can select, from the simulation module pull down "Simulate" menu, the "Multitouch Mode" as shown in Figure 3.

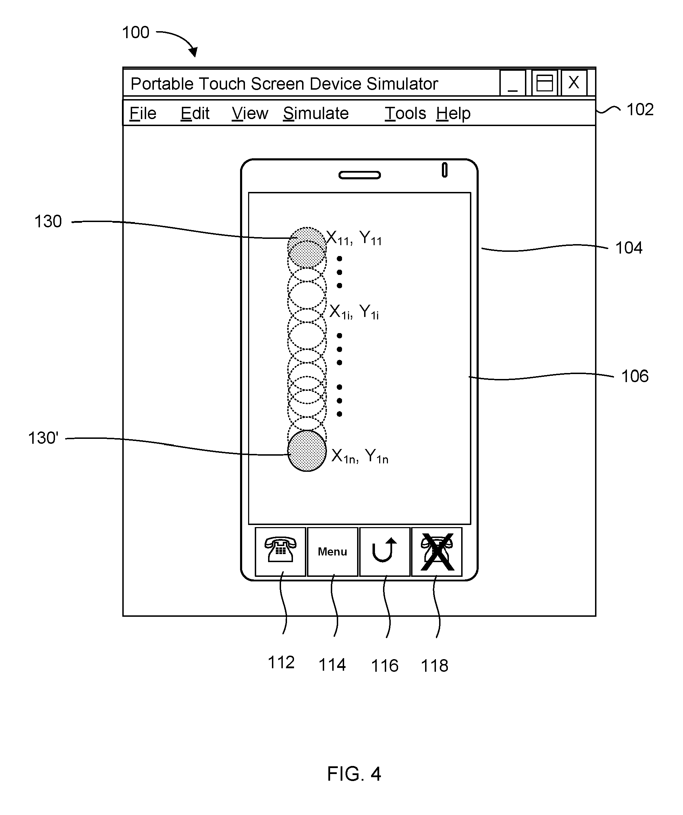

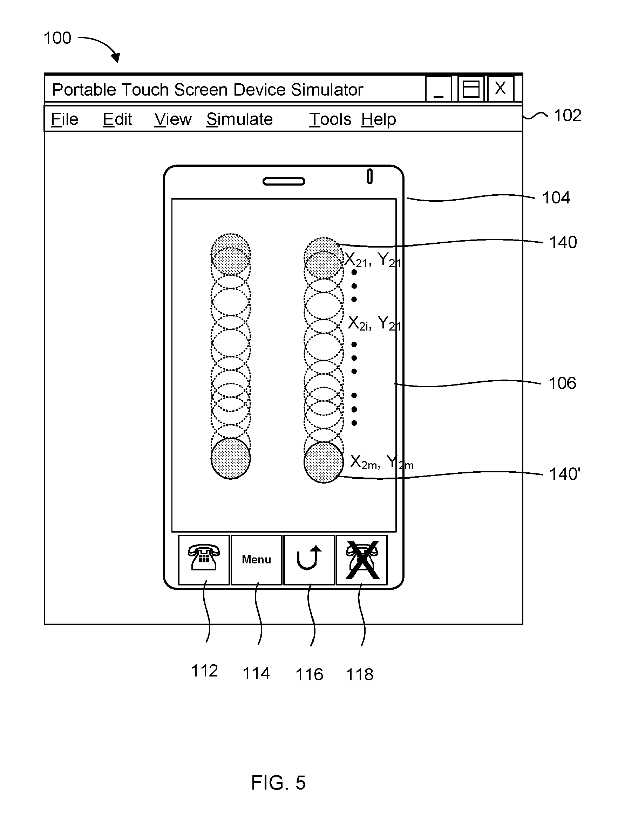

Upon entering the multi-touch simulation mode (step 202), the user can "record" or simulate touch motion or event. In an example embodiment, a gesture of user making a parallel straight swipe motion using two fingers (corresponding to a simultaneous touch event using two touches) is illustrated in Figures 4 and 5. The two simultaneous touch events can be simulated by "recording" two individual straight swipe motions and then rendering the two individual events as a single simultaneous multi-touch event. Figure 4 illustrates the recording of the first touch event (step 204). The initial touch occurs at the location 130, corresponding to the coordinates, X₁₁-Y₁₁. This can be, for instance, the location within the simulated touchscreen display window 106, where the user initially clicked using the desktop non-touchscreen input device, for example a mouse. The user then drags the mouse (without releasing the initial click) through a number of points (or locations) on the simulated touchscreen display 106, generally depicted by coordinates X₁ᵢ-Y₁ᵢ, and then releases the mouse button at the end location 130', corresponding to the coordinates, X₁ₙ-Y₁ₙ, to complete the first touch event.

Figure 5 illustrates the recording of the second touch event (step 204). The initial touch occurs at the location 140, corresponding to the coordinates, X₂₁-Y₂₁. The user then drags the mouse through a number of points (or locations) on the simulated touchscreen display 106, generally depicted by coordinates X₂ᵢ-Y₂ᵢ, and then releases the mouse button at the end location 140', corresponding to the coordinates, X₂ₘ-Y₂ₘ, to complete the second touch event.

The simulation module of the portable touchscreen device simulator 100 then combines the two individual touch events to render the gesture of the user making a parallel straight swipe motion using two fingers as a single simultaneous multi-touch event. In an exemplary embodiment, an user is able to select a portion of text by simultaneously touching the end-points corresponding to the desired portion of the text; for example, end-points of a straight line or two points along a diagonal of a text block. In the example shown in Figures 4 and 5, the selected portion of the text may be defined by a rectangle with coordinates X₁₁-Y₁₁, X₂₁-Y₂₁, X₁ₙ-Y₁ₙ, and X₁ₘ-Y₁ₘ. The selected portion of the text is then available for processing events such as cut, copy, format (e.g., bold, underline, italic) etc.

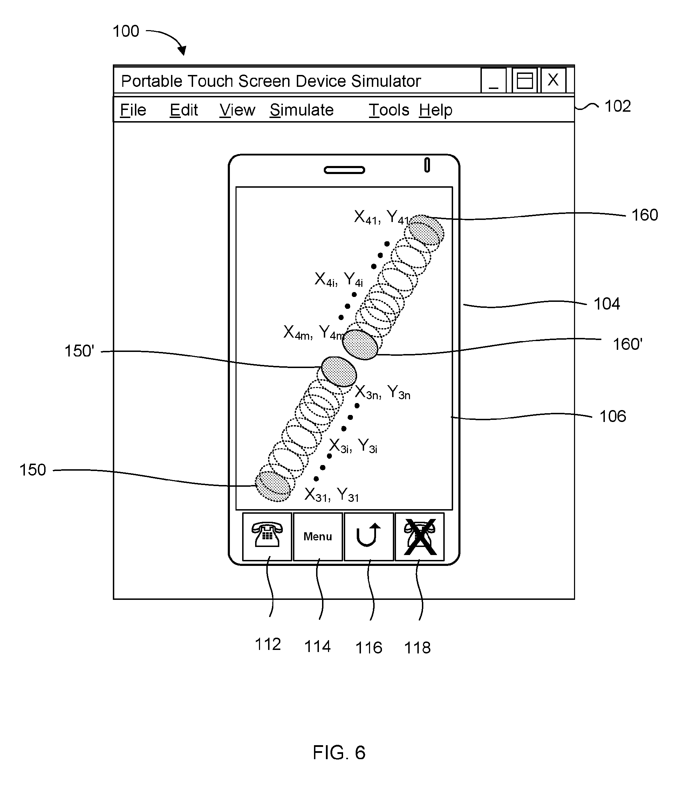

A "pinch motion" gesture is depicted in Figure 6, corresponding to two simultaneous touch events that bring the user's fingers touching the touchscreen display in the "pinch motion". Again, in the portable touchscreen device simulator 100, the two simultaneous touch events can be simulated by "recording" two individual diagonal swipe motions and then rendering the two individual events as a single simultaneous multi-touch event corresponding to a pinch gesture.

The initial touch for the first touch motion occurs at location 150 and for the second touch motion occurs at location160, corresponding to the coordinates, X₃₁-Y₃₁ and X₄₁-Y₄₁, respectively. In the first touch motion, the user drags the mouse through a number of points (or locations) on the simulated touchscreen display 106, generally depicted by coordinates X₃ᵢ-Y₃ᵢ, and then releases the mouse button at the end location 150', corresponding to the coordinates, X₃ₙ-Y₃ₙ, to complete the first touch motion. Similarly, in the second touch motion, the user drags the mouse through a number of points (or locations) on the simulated touchscreen display 106, generally depicted by coordinates X₄ᵢ-Y₄ᵢ, and then releases the mouse button at the end location 160', corresponding to the coordinates, X₄ₘ-Y₄ₘ, to complete the second touch motion. It is noted that in this example, coordinates X₃ₙ-Y₃ₙ and X₄ₘ-Y₄ₘ are relatively close to each other on the simulated touchscreen display 106. The simulation module of the portable touchscreen device simulator 100 then combines or plays back simultaneously the two individual touch events or motions to render the "pinch" gesture using two fingers as a single simultaneous multi-touch event. A sub-routine associated with the simulated simultaneous multi-touch motion, i.e., the pinch gesture, to execute a zoom-out function, for example, can then be generated by the simulation module.

Similarly, a gesture corresponding to simultaneous touch events that take a user's fingers away, for example, from initial coordinates X₃ₙ-Y₃ₙ and X₄ₘ-Y₄ₘ to X₃₁-Y₃₁ and X₄₁-Y₄₁ can be rendered and associated with a sub-routine for executing a zoom-in function.

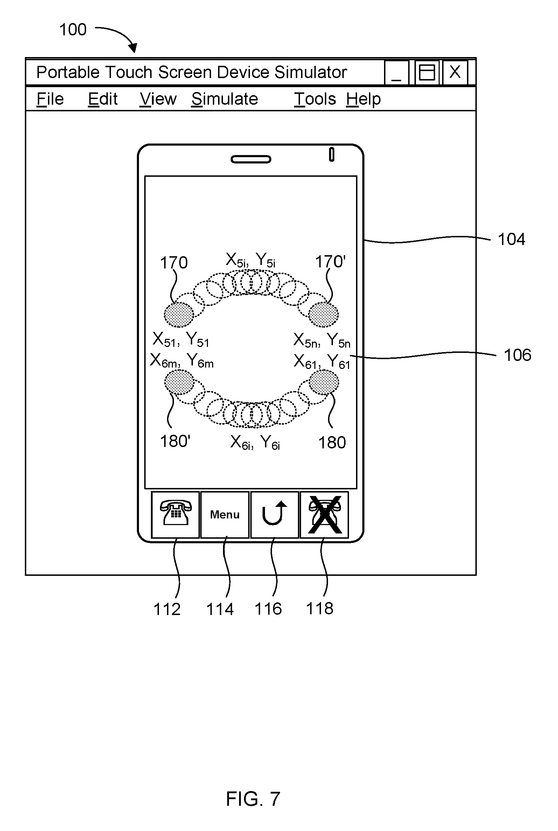

A "circular motion" or an "arc motion" gesture is depicted in Figure 7, corresponding to two simultaneous touch events that bring the user's fingers touching the touchscreen display in a clockwise "circular motion." Again, in the portable touchscreen device simulator 100, the two simultaneous touch events can be simulated by "recording" two individual arc motions and then rendering the two individual events as a single simultaneous multi-touch event corresponding to a circular motion gesture.

The initial touch for the first touch motion occurs at location 170 and for the second touch motion occurs at Iocation180, corresponding to the coordinates, X₅₁-Y₅₁ and X₆₁-Y₆₁, respectively. In the first touch motion, the user drags the mouse through a number of points (or locations) on the simulated touchscreen display 106, generally depicted by coordinates X₅ᵢ-Y₅ᵢ, and then releases the mouse button at the end location 170', corresponding to the coordinates, X₅ₙ-Y₅ₙ, to complete the first touch motion. Similarly, in the second touch motion, the user drags the mouse through a number of points (or locations) on the simulated touchscreen display 106, generally depicted by coordinates X₆ᵢ-Y₆ᵢ, and then releases the mouse button at the end location 180', corresponding to the coordinates, X₆ₘ-Y₆ₘ, to complete the second touch motion. It is noted that in this example, coordinates X₅ₙ Y₅ₙ and X₆₁-Y₆₁ are relatively close to each other on the simulated touchscreen display 106. The simulation module of the portable touchscreen device simulator 100 then combines or plays back simultaneously the two individual touch events or motions to render the "circle" gesture using two fingers as a single simultaneous multi-touch event. A sub-routine associated with the simulated simultaneous multi-touch motion, i.e., the circle gesture, to execute a clockwise rotate function, for example, can then be generated by the simulation module.

Similarly, a gesture corresponding to simultaneous touch events that depicts a counterclockwise circle gesture, for example, from initial coordinates X₅ₙ-Y₅ₙ and X₆ₘ-Y₆ₘ to X₅₁-Y₅₁ and X₆₁-Y₆₁ can be rendered and associated with a sub-routine for executing a counterclockwise rotation function.

Although, in the above examples, the first and second touch motions are related to one another, the two touch motions may be completely independent and arbitrary relative to one another to generate any arbitrary gesture to be used by the developer in an application. The simulated simultaneous multi-touch motion or gesture can be used define a multi-touch motion on a portable electronic device having a touchscreen display. The sub-routine associated with the simulated simultaneous multi-touch motion may be generated in a pre-determined programming language supported by the portable electronic device for which the application is being developed.

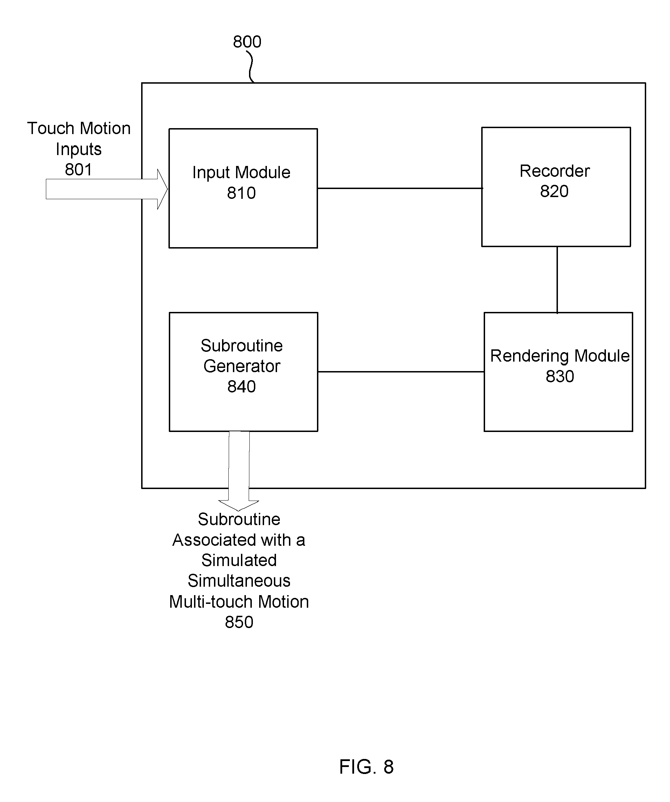

Figure 8 is a schematic representation of a multi-touch motion simulator according to an aspect. The multi-touch motion simulator 800 comprises an input module 810, a recorder 820, a rendering module 830, and a sub-routine generator 840. The input module receives a touch motion inputs 801, for example, a first touch motion and a second touch motion from the non-touchscreen computer input device (not shown). The recorder 820 records the first touch motion and the second touch motion and the rendering module 830 renders the recorded first touch motion and the second touch motion as a simulated simultaneous multi-touch motion. The sub-routine generator 840 generates a sub-routine 850 associated with the simulated simultaneous multi-touch motion.

In addition to simulating simultaneous multi-touch motions, the simulator can record and render simulated sequential multi-touch motions. For example, an application may require a user to perform two gestures in sequence, such as a rotate function followed by a zoom function.

An example of simulating a sequential multi-touch motion is described with respect to Figure 8. Continuing from the earlier description of the simulator 800, the input module 810 can further receive a third touch motion from the non-touchscreen computer input device. The recorder 820 then records the third touch motion and the rendering module 830 renders the simulated simultaneous multi-touch motion and the recorded third touch motion as a simulated sequential multi-touch motion. The sub-routine generator 840 further generates a second sub-routine associated with the simulated sequential multi-touch motion.

The second sub-routine associated with the simulated sequential multi-touch motion may execute a task associated with the simulated sequential multi-touch motion. For example, a file open function followed by a rotate function.

The task associated with the simulated sequential multi-touch motion may be a sequential combination as described above. Alternatively, the task associated with the simulated sequential multi-touch motion may be an arbitrary combination of tasks associated with one or more simulated simultaneous multi-touch motions. For example, in a gaming application, an clockwise circle gesture followed by a pinch gesture could invoke a shortcut to execute an "about-turn and temporarily disappear" function or the like.

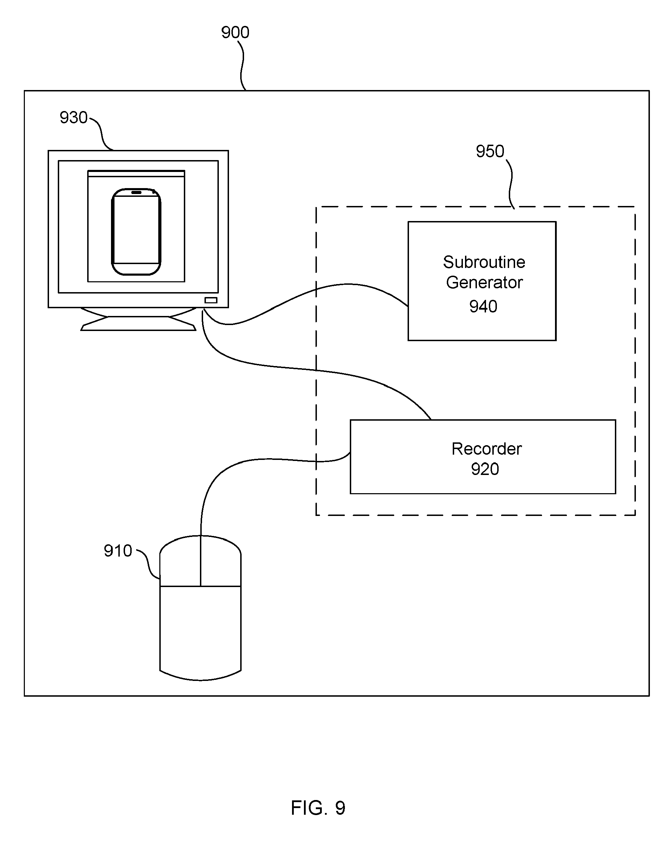

Figure 9 is a schematic representation of a system for multi-touch motion simulation in accordance with another aspect. The system 900 comprises a non-touchscreen computer input device 910, a recorder 920, a display logic (not shown) including a display 930 and a sub-routine generator 940. As described earlier, a first touch motion and a second touch motion are input using the non-touchscreen computer input device 910. The recorder 920 records the first touch motion and the second touch motion. The display logic renders the recorded first touch motion and the second touch motions as a simulated simultaneous multi-touch motion on the display 930. The sub-routine generator 940 generates a sub-routine associated with the simulated simultaneous multi-touch motion. The display logic, the recorder 920, and the sub-routine generator 940 can be a part of the central processing unit 950 of the computer system 900.

Thus, the portable touchscreen device simulator 100 allows the user or developer to simulate any number of multi-touch gestures. The simulated multi-touch gesture can then be attributed to a set or sequence of events, such as for example zooming in or out, rotating, enlarging, selecting and highlighting, that will be performed by the portable electronic device in response to that multi-touch gesture or for troubleshooting purposes. For example, the portable touchscreen simulator 100 can generate operating system level input events corresponding to any simulated multi-touch event, which can be used by user interface developers for attributing a sequence of response events to be performed by the processor of the portable electronic device upon detecting the multi-touch event. Thus, any number of multi-touch events corresponding to any number of gestures may be simulated, recognized, and a suitable response may be developed.

In the following description, for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention. For example, specific details are not provided as to whether the example embodiments of the invention described herein are implemented as a software routine, hardware circuit, firmware, or a combination thereof.

Example embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium, including magnetic, optical, or electrical storage medium including a diskette, compact disk read only memory (CD-ROM), memory device (volatile or nonvolatile), or similar storage mechanism. The machine-readable medium may contain various sets of instructions, code sequences, configuration information, or other data, which, when executed, cause a processor to perform steps in a method according to an example embodiment of the invention. Those of ordinary skill in the art will appreciate that other instructions and operations necessary to implement the described invention may also be stored on the machine-readable medium. Software running from the machine-readable medium may interface with circuitry to perform the described tasks.

While the example embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A method of multi-touch motion simulation using a non-touchscreen computer input device, the method comprising:
entering a multi-touch simulation mode (202);
recording a first touch motion and a second touch motion using the non-touchscreen computer input device (204, 206);
rendering the recorded first touch motion and the recorded second touch motion as a simulated simultaneous multi-touch motion (208); and,
generating a sub-routine associated with the simulated simultaneous multi-touch motion (210).

2. The method of claim 1, wherein the first touch motion and the second touch motion are independent relative to one another.

3. The method of claim 1 or claim 2, wherein the sub-routine executes a task associated with the simulated simultaneous multi-touch motion.

4. The method of any one of claims 1 to 3, wherein the simulated simultaneous multi-touch motion defines a multi-touch motion on a portable electronic device having a touchscreen display.

5. The method of claim 4, wherein the multi-touch motion on the portable electronic device corresponds to a swipe motion; a circular motion; an arc motion; a rotate motion or a pinch motion.

6. The method of claim 4 or claim 5, wherein the sub-routine is generated in a pre-determined programming language supported by the portable electronic device.

7. The method of any one of the preceding claims, wherein the sub-routine associated with the simulated simultaneous multi-touch motion is a first sub-routine and the method further comprising:
recording a third touch motion using the non-touchscreen computer input device;
rendering the simulated simultaneous multi-touch motion and the recorded third touch motion as a simulated sequential multi-touch motion; and,
generating a second sub-routine associated with the simulated sequential multi-touch motion.

8. The method of claim 7, wherein the third touch motion is independent relative to the first touch motion and the second touch motion.

9. The method of claim 7 or claim 8, wherein the second sub-routine associated with the simulated sequential multi-touch motion executes a task associated with the simulated sequential multi-touch motion.

10. The method of claim 9, wherein the task associated with the simulated sequential multi-touch motion is a sequential combination of tasks associated with one or more simulated simultaneous multi-touch motions.

11. The method of claim 9, wherein the task associated with the simulated sequential multi-touch motion is an arbitrary combination of tasks associated with one or more simulated simultaneous multi-touch motions.

12. A simulator (800) to simulate a multi-touch motion using a non-touchscreen computer input device, the simulator comprising:
an input module (810) to receive a first touch motion and a second touch motion from the non-touchscreen computer input device (801);
a recorder (820) to record the first touch motion and the second touch motion;
a rendering module (830) to render the recorded first touch motion and the recorded second touch motion as a simulated simultaneous multi-touch motion;
and,
a sub-routine generator (840) to generate a sub-routine (850) associated with the simulated simultaneous multi-touch motion.

13. The simulator of claim 12, wherein the sub-routine associated with the simulated simultaneous multi-touch motion is a first sub-routine and the input module receives a third touch motion from the non-touchscreen computer input device;
the recorder records the third touch motion;
the rendering module renders the simulated simultaneous multi-touch motion and the recorded third touch motion as a simulated sequential multi-touch motion; and,
the sub-routine generator generates a second sub-routine associated with the simulated sequential multi-touch motion.

14. A system (900) for simulating a multi-touch motion comprising:
a non-touchscreen computer input device (910) to input a first touch motion and a second touch motion and a simulator according to claim 12 or claim 13.

15. A computer-readable medium having computer-readable code embodied therein for execution by a processor to carry out a method of multi-touch motion simulation using a non-touchscreen computer input device according to any one claims 1-11.
